# EUROPEAN PATENT SPECIFICATION

(11) **EP 3 372 875 B1**
(45) Date of publication and mention of the grant of the patent: **08.07.2020**
(21) Application number: 17160107.3
(22) Date of filing: 09.03.2017
(51) Int. Cl.: F16K 5/06, F16K 27/06, B23P 15/00

(54) **BALL VALVE**
KUGELVENTIL
SOUPAPE À BILLE

(43) Date of publication of application: 12.09.2018
(73) Proprietor: Vexve Oy, 38200 Sastamala (FI)
(72) Inventor: RANDELL, Jari, 20660 Littoinen (FI)
(74) Representative: Papula Oy

(56) References cited:
- EP-A1- 1 323 965
- EP-A1- 3 141 782
- WO-A1-88/04380
- WO-A1-2014/026691
- FR-A- 1 452 769
- GB-A- 1 297 647
- JP-A- H02 229 634
- US-A- 3 050 082
- US-A- 3 356 337
- US-A- 3 780 986
- US-A- 4 269 391
- US-A- 4 546 790
- US-A- 4 660 591
- US-A1- 2011 233 438

## Description

### BACKGROUND

The disclosure herein relates to ball valves, more particularly to a ball valve seal and a method to manufacture a ball valve. Ball valves may be used in district heating systems configured to distribute heat with hot water. Other applications for ball valves are hydronic heating systems or delivery of water or other fluids with pipes. A common problem for ball valves is that they have a long lifetime, which requires reliable functioning. Fixing the water based piping system may be expensive and it usually causes maintenance pauses in the delivery system. Since every additional component in a ball introduces a potential source of failure, reliability of the ball valve may be improved by reducing the number of components in the valve. Another objective for the ball valve manufacturing is to save excess material. One example of saving material is to manufacture the ball valve from a tubular material. Furthermore, manufacturing the ball valve from a tubular material requires that the valve seals operate correctly during and after the manufacturing process. The components may be sealed inside the valve body, thereby not being serviceable, creating a further need for the ball valve seal's reliable operation.

WO2014202093 discloses a valve seat that is arranged in the valve housing and is resiliently bearing against the valve body. The valve seat includes a resilient structural part where the spring action from the resilient structural part acts in a direction which is substantially in parallel with the flow direction of the valve, and where the resilient structural part includes at least one annular flange part adapted for direct or indirect bearing on the valve body. The resilient valve seat or seats include a fixing member for mechanical fixing of the valve seat in a valve housing, the fixing member including means, for example a flange part, fixed in a valve housing by plastic deformation of the valve housing and/or by plastic deformation of the means.

Furthermore, EP1323965 discloses a ball valve and its manufacturing method, US4546790 discloses a fluid valve, WO2014026691 discloses a valve housing with a collared spindle guide, EP3141782 discloses a ball valve and GB1297647 discloses seals for spherical and rotatable surfaces.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A ball valve may be manufactured from a metal tube, which may for example be made of a metal sheet. The metal tube is deformed by applying pressure to the tube to form a valve body. The deformation process may be completed without producing sharp edges inside the valve body in the direction of the fluid flow. The valve body is produced sequentially with conical portions towards the inlet and the outlet. A valve seat may be made of a single piece having appropriate material characteristics so as to provide both the resilience required for efficient sealing contact and the structural strength required to keep the piece intact even as the temperature and pressure inside the valve is increased. The appropriate material characteristics may be obtained by using a valve seat made of a mixture of at least two different material components, a first component providing the resilience and a second component providing the structural strength. The valve seat is installed to the conical portions near the inlet and the outlet. An additional sealing element such as an O-ring may be positioned on the valve seat to provide resilient sealing contact against the inner surface of the valve body and the conical portion in particular. Due to the manufacturing process, the inner surface along the conical portion may be smooth so that it may be used to tightly press the additional sealing element against the valve seat. When the ball valve is formed by contracting the metal tube around the valve seat, the additional sealing element is compressed against the valve seat forming a resilient sealing contact and the resilient valve seat may in turn compress against a ball member of the ball valve. The valve seat and the additional sealing element together form a valve seal which may be used to support the ball member by providing contacts having desired resilience characteristics with respect to both the ball member and the inner surface of the valve body while at the same time adding only a small number of parts into the ball valve assembly. Additionally, the construction may be used to efficiently remove excess pressure from the ball valve through the resilient contacts.

The arrangement allows manufacturing of a symmetric, bidirectional ball valve. The structure is rigid and does not necessarily require welding during the manufacturing. The seals inside the valve may not endure the excess heat produced by the welding and deformation by pressure may therefore be easier to the seals. The solution allows selecting seal materials that have characteristics better suited for temperatures at which the ball valve will be used.

Many of the attendant features will be more readily appreciated as they become better understood by reference to the following detailed description considered in connection with the accompanying drawings. The embodiments described below are not limited to implementations which solve any or all of the disadvantages of known ball valves or methods of manufacturing ball valves.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a simplified cross-sectional illustration of an exemplary embodiment of a ball valve; and
Fig. 2 illustrates one example of the manufacturing method.

### DETAILED DESCRIPTION

Reference will now be made in detail to the exemplary embodiments of the present invention, examples of which are illustrated in the accompanying drawings. The embodiments described herein may be used in any combination with each other. Several of the embodiments may be combined together to form a further embodiment. The device may comprise at least one of the embodiments described hereinbefore. It is to be understood that any of the above embodiments or modifications can be applied singly or in combination to the respective aspects to which they refer, unless they are explicitly stated as excluding alternatives.

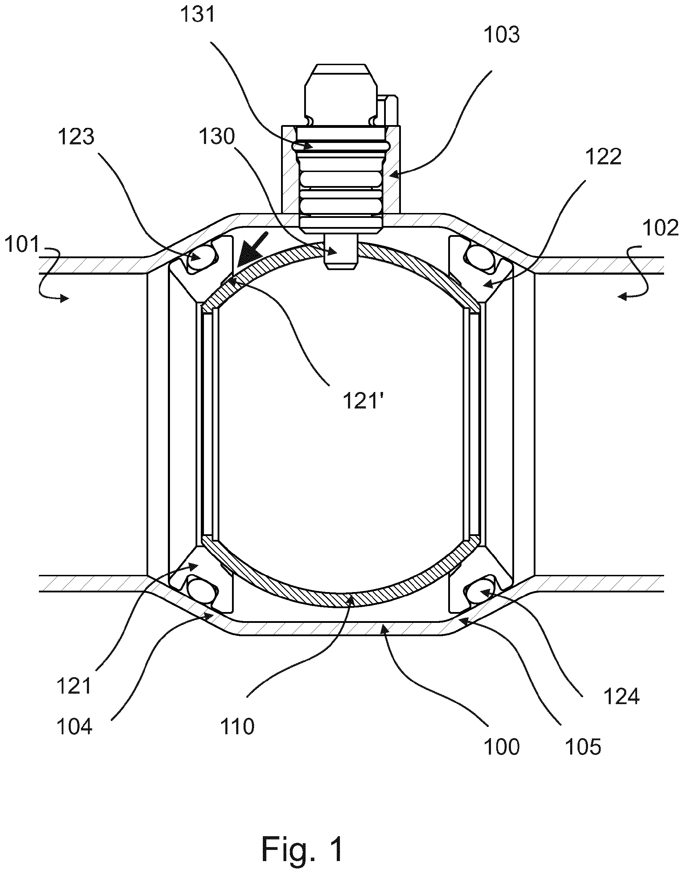

Figure 1 shows a simplified cross-sectional drawing of a ball valve. In particular, cross-sectional views are provided for components 100, 104, 105, 110, 121, 122, 123 and 124. A valve body 100 comprises an inner space for housing a ball member 110. The valve body 100 may be manufactured for example from a metal sheet by bending and welding it or by machining it, for example by using an extruder, to produce a seamless metal cylinder. The valve body 100 has two valve seats 121, 122 arranged for the ball member 110. The valve seats 121, 122 may be of annular shape and, consequently, they may smoothly engage the ball member 110. The valve seats 121, 122 may comprise a through-hole. One or more of the valve seats 121, 122 may comprise an indentation or a chamfered edge 121' for releasing pressure from the ball valve. The valve body 100 comprises an inlet 101 and an outlet 102, which can be connected to piping to allow fluids to flow through the valve. Fluids may be either gasses or liquids. The ball member 110 has at least partially a spherical outer surface and includes a port 111 extending through the ball member 110. The ball member 110 may be made of metal, for example of stainless steel, and in particular of stainless steel comprising at least 16 percent and/or at most 20 percent of chromium in its mass. The ball member 110 may be configured to be suitable for the fluid flowing through the valve, for example by using a suitable material. The ball member 110 is rotatable between a closed position in which the flowing of the fluid from the inlet 101 to the outlet 102 through the port 111 is hindered, and an open position in which the flowing of the fluid from the inlet 101 to the outlet 102 is allowed through the port 111. By hindering the fluid flow, the flow may be reduced or stopped altogether. Exemplary applications for the ball valve are district heating systems, district cooling systems, cooling fluid distribution systems, natural gas distribution system, primary/secondary building services and plumbing.

In an embodiment, a stem 130 is attached to the ball member 110 for rotating the ball member 110 around an axis of rotation. The valve body 100 comprises a stem bush 103 to support the stem 130. The stem 130 can be rotated by turning a handle connected to the stem 130. In one embodiment an actuator is configured to rotate the stem 130. The ball member 110 inside the valve body 100 is rotated from a closed to an open position by turning the handle for about 90 degrees. The ball valve may be used for regulating a fluid. In one embodiment the stem bush 103 comprises a groove for receiving a retaining ring and the stem 130 comprises a retaining ring 131 configured to fasten the stem 130 to the stem bush 103. The groove may be positioned on an inner surface of the stem bush 103 and it may extend around the circumference of the stem bush 103. A retaining ring 131 is a fastener that holds the stem 130 on the stem bush 103 when installed in a groove. The retaining ring 131 may be a snap ring, i.e., a ring with a small portion of its circumference missing, so that the ring may be installed by compressing it to form a ring of a smaller circumference and then releasing it so that the spring force of the ring returns it to its original shape having a larger circumference. The exposed portion of the retaining ring 131 acts as a shoulder which retains the stem 130 in place. By using the retaining ring 131, the stem 130 may be installed simply by pressing it into the stem bush 130 from outside the valve body 100. The installation may consequently be automatized.

The ball valve comprises two valve seats 121, 122 arranged on the opposite sides of the ball member 110 inside the valve body 100. The ball member 110 is pivotably mounted in the valve interior and held in place by the valve seats 121, 122. The valve body comprises an inner surface and an outer surface, and the inner surface comprises at least one conical portion 104, 105. Also the outer surface may comprise a conical portion at the corresponding place, in particular when the valve body 100 is manufactured from a tube. The conical portion 104, 105 may be smooth so that it does not contain any projections, bumps, recesses or indentations. The conical portion 104 comprises a small end and a large end so that the small end is pointed from the ball member 110 towards the inlet 101. Another conical portion 105 may be arranged on the opposite side of the valve body 100, wherein the small end of the conical portion 105 is pointed from the ball member 110 towards the outlet 102. The valve body may be made of a tube, in particular of a metal tube. In an embodiment the valve body 100 is made of tubular sheet metal, for example from a predefined tubular workpiece suitable for deformation. In one embodiment the valve seat arrangement as described hereinbefore is provided only on one side of the ball valve, either on the inlet 101 or on the outlet 102. In another embodiment, the valve seat arrangement as described hereinbefore is provided on both sides of the ball valve. In one embodiment the ball valve is bidirectional, wherein the inlet 101 is suitable as an outlet 102 and, vice versa, the outlet 102 is suitable as an inlet 101.

At least one of the valve seats 121, 122 may comprise and indentation or a chamfered edge 121' (hereafter "indentation"). The indentation 121' may be located on an inner edge of the valve seat 121, 122, i.e. an edge facing the ball member 110. The indentation 121' may further be located on an edge of the valve seat 121, 122 facing away from the inlet 101, when the valve seat 121 is located closer to the inlet 101 than the outlet 102, and facing away from the outlet 102, when the valve seat 122 is located closer to the outlet 102 than the inlet 101. The indentation 121' may extend around the circumference of the valve seat 121, 122. In an embodiment, the valve seat 121 closer to the inlet 101 comprises the indentation 121'. In another embodiment, both valve seats 121, 122 comprise an indentation 121'. The indentation may be configured for releasing pressure from the ball valve.

At least one of the valve seats 121, 122 is configured to support a resilient seal element 123, 124. The valve seat 121, 122 is configured to sealingly engage with the ball member 110. In an embodiment, both valve seats 121, 122 support a resilient seal element 123, 124. In an embodiment the valve seat 121, 122 is configured to position the resilient seal element 123, 124, for example during the manufacturing process. In a further embodiment, the valve seat 121, 122 comprises a groove for positioning the resilient seal element 123, 124. The groove may extend around a circumference of the valve seat 121, 122. The valve seat 121, 122 is made of material comprising at least a first component and a second component. The first component has material properties suitable for providing resilience to the valve seat 121, 122 thus allowing the formation of a resilient sealing contact with the ball member 110. The second component has material properties suitable for providing structural strength, or rigidity, to the valve seat 121, 122 so that the valve seat stays intact under the operating conditions of the ball valve, in particular under increased temperature or pressure. Both components may be chosen so that the valve seat 121, 122 may be used for example in temperatures of at least up to 200°C or under pressure of at least up to 20 bar. In particular to meet a European standard for ball valves valid at the time of filing the application, the components may be chosen so that the valve seat 121, 122 may be used in temperatures of at least up to 140°C or under pressure of at least up to 16 bar. Both components may be chosen so that the above conditions for temperature and pressure are satisfied separately or simultaneously. The components may also be chosen based on their resistance to mechanical and chemical wear. The valve seat 121, 122 may be made of a material consisting solely of the first component and the second component. The valve seat 121, 122 may consist of a single piece of such material. This way the number of components in the ball valve may be limited to reduce the chance of malfunction. Using a monolithic piece of such a compound material as the valve seat 121, 122 may also provide uniform quality and material properties for the valve seat 121, 122. In particular, a need for a separate metallic valve seat may thus be eliminated.

In an embodiment, the first component material for the valve seat 121, 122 is PTFE (polytetrafluoroethylene). While PTFE may be used to provide resilience to the valve seat 121, 122 made of a material compound, it has a relatively low melting point in comparison to the typical ball valve operation temperature, and therefore it may experience degradation in its properties at high temperatures when used separately. In particular, it may start to loosen and leak away from the valve. Consequently, the second component may be chosen so as to provide structural strength that allows the operation of the valve seat 121, 122, where the first component is PTFE, in temperatures of at least up to 200°C or under pressure of at least up to 20 bar. In particular, the second component may be chosen so as to provide structural strength that allows the operation of the valve seat 121, 122, where the first component is PTFE, in temperatures of at least up to 140°C or under pressure of at least up to 16 bar.

In an embodiment, the second component material for the valve seat 121, 122 is metal such as iron or copper, metal alloy such as steel, glass fiber or carbon in any form such as carbon fiber, graphite, graphene, carbon nanotubes or some other carbon nanomaterial. The second component may be in powder form which may minimize the mechanical abrasion exerted by the valve seat 121, 122 upon the ball member 110. The second component may be chosen to be the same material as that used in the ball member 110. In this way, it may be guaranteed that the second component is suitable for use under the same operating conditions as the ball member ball member 110. In a specific embodiment the second component is stainless steel, i.e. metal alloy comprising steel and chromium. The chromium content may be larger than 10 percent of the total mass of the stainless steel component. In particular, the chromium content may be at least 16 percent and/or at most 20 percent of the chromium content of the stainless steel component.

The particular material content of either the ball member 110 or the valve seat 121, 122 may be varied depending on the desired properties of the ball valve such as corrosion resistance, oxidation resistance, formability etc. For example, stainless steel used in any combination of the abovementioned valve parts may include a suitable combination of materials including, for example, carbon, chromium, iron, manganese, nickel, nitrogen, phosphorous, silicon, sulfur, etc.

The amount of the second component in relation to the first component may be varied depending on the desired material properties. For example, the mass of the second component may correspond 10-60 percent of the total mass of the valve seat 121, 122. As another example, the mass of the second component may correspond 50 percent of the total mass of the valve seat 121, 122. Such ratios may be used, for example, when the first component is PTFE and in particular, when the first component is PTFE and the second component is stainless steel. Furthermore, the ball member 110 may be of the same material as the second component.

The resilient seal element 123, 124 is configured to sealingly engage with the conical portion 104, 105 of the valve body 100. The resilience of the seal element 123, 124 provides added resilience to the sealing contact against the valve body 100. The flex between the resilient seal element 123, 124 and the valve seat 121, 122 may also be utilized in the manufacturing process. As the valve seat arrangement as described hereinbefore may be provided only on one side of the ball valve or on the both sides of the ball valve, also the resilient seal 123, 124 may be placed only on one side of the ball valve or on the both sides of the ball valve. The resilient seal element 123, 124 may be made of elastomer. In an embodiment, the resilient seal element 123, 124 is made of rubber or bitumen. The material used may be selected so that the ball valve comprising the resilient sealing element 123, 124 is suitable for use in district heating or cooling systems. In an embodiment, the resilient seal element 123, 124 has an annular shape so that it may smoothly engage the ball member 110. In a further embodiment, the resilient seal element 123, 124 is an O-ring. The O-ring is a mechanical gasket in the shape of a torus, a loop of elastomer with a round cross-section. In one embodiment, the valve seat 121 122 comprises a groove suitable for the O-ring to be positioned correctly. The positioning of the resilient seal element may be performed during manufacture, in particular when the conical portion 104, 105 is compressed against the resilient seal element 123, 124.

In some circumstances the ball valve may build overpressure inside the valve body 100. The pressure may result from a temperature difference between the inlet 101, outlet 102 and/or the inner space of the valve body 100. As an example, in one embodiment the temperature difference of 10°C between the fluid inside the ball valve and outside the ball valve may cause a pressure of 8 bars. In one embodiment, the valve seat 121 releases the overpressure from inside the ball valve in the direction of the arrow in Figure 1. In particular, the valve seat 121 may be configured to release pressure from the inner space of the valve body 100 into the inlet 101. The valve seat 121, 122 has a shape allowing the pressure to be released from the middle of the annular valve seat 121, 122. The resilient contacts between the ball member 100, the inner surface of the valve body 100 and the valve seal comprising the valve seat 121, 122 and the resilient sealing element 123, 124 may be configured to allow the release of pressure. This may be done, for example, by shaping and material selection. In particular, one or more of the valve seats may comprise indentations or chamfered edges 121' as described hereinabove for releasing the pressure. The contact between the valve seat 121, 122 and the ball member 110 may comprise a sharp angle opening away from the inlet 101 or outlet 102, whichever is closer.

The sharp angle is one feature that allows the overpressure to be released from inside the ball valve and it may be part of the indentation or chamfered edge 121'. The properties of valve seal and its contact between the ball member 110 and the inner surface of the valve body 100 may be configured so that the sealing contacts remain tight while the torque exerted on the components does not grow too strong. The valve seat 121, 122 may be configured in a floating seal configuration inside the valve body 100. The valve body 100 may act as a functional element of the valve seat 120. The valve seat 121, 122 may provide flexibility in both directions in the axis of fluid flow. A torque of a ball valve determines the force required to turn the stem 130. The valve seat 121, 122 may be selected to define the torque of the ball valve. Different shapes of the valve seat 121, 122 define the nominal torque. Different shapes and stiffness configurations for the valve seat 121, 122 allow different torques to be selected for the ball valve.

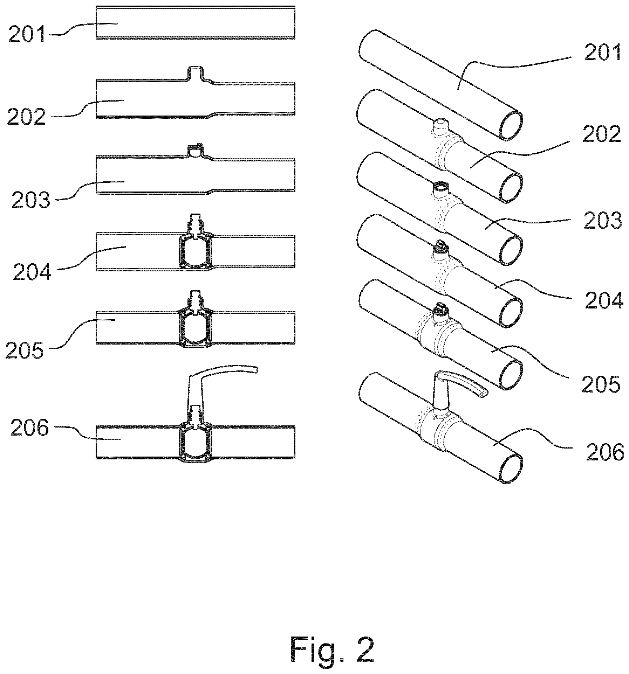

Figure 2 illustrates one example of the manufacturing method, highlighting the transformations of the product achieved by the process. The illustrated ball valve is only an example and is not limiting the design of the ball valve to the illustrated example. In the first step 201 of the method of manufacturing the ball valve, a metal tube or tubular sheet metal is cut to a predefined length. The material of the metal tube is suitable for deformation and the material thickness is suitable to function in the final product.

In step 202, a portion of the metal tube is expanded to form a first portion of the valve body. One example of expanding the metal tube is hydroforming the metal tube into a die configured to form the outer surface of the first portion of the valve body and applying a high pressure hydraulic fluid to press the metal tube into the die. Another example is hot forming, where the metal tube is heated to improve its processibility. Yet another example is mechanical expansion, where mechanical pressure is exerted on the metal tube for example by a pressing device. These methods produce a uniform body, wherein the inner surface of the valve body follows the outer surface. In one embodiment a stem bush is formed after expanding the metal tube. In one embodiment the stem bush is hydroformed, hot formed or machined by laser during step 202. In step 203 the formed metal tube is machined, for example grooves or threads may be arranged to the stem bush. After this step, the inner surface of the valve body has a first conical portion and the remaining portion of the metal tube forms a first end of the ball valve.

A first resilient seal element is positioned on a first annular valve seat. In step 204, a ball member is positioned against the first valve seat, the first valve seat sealingly engaging with the ball member and the first resilient seal element sealingly engaging with the first conical portion of the valve body. A second resilient seal element is positioned on a second annular valve seat. The second valve seat may be identical to the first valve seat. The second valve seat is positioned against the ball member, wherein the second valve seat is sealingly engaging with the ball member.

In step 205, a portion of the expanded metal tube is contracted to form a second portion of the valve body and a second end of the ball valve. The contraction may be executed by applying pressure to the outer surface of the metal tube. The inner surface of the valve body forms a second conical portion. The second valve seat is in position, and as a result of the contraction the second resilient seal element is sealingly engaging with the second conical portion of the valve body.

In step 206, the ball valve is assembled and machined according to the product description, for example by assembling or machining the inlet and/or outlet interconnections or the stem handle.

The components of the ball valve manufactured according to the process described above may have any or all the features described above for the ball valve, in particular in reference to Figure 1.

In one embodiment of the method for manufacturing a ball valve, the method comprises connecting the stem 130 to the ball member 110 by pressing the stem 130 through the stem bush 103 to a receiving portion of the ball member. The stem bush 103 is arranged in the valve body 100. In one embodiment the stem bush 103 comprises a groove and the stem 130 comprises a retaining ring 131 configured to fasten the stem 130 to the stem bush 103. The retaining ring 131 may be a snap ring. In one embodiment the first resilient seal element is an O-ring. In one embodiment, the first annular valve seat is made of material comprising at least a first component for providing resilience and a second component for providing structural strength. In one embodiment the first component is PTFE. In one embodiment the second component is stainless steel.

One aspect discloses a ball valve comprising: a valve body comprising an inlet, an outlet, an inner surface and an inner space; two annular valve seats; a ball member arranged between the annular valve seats and between the inlet and the outlet, said ball member being pivotably mounted in the inner space of the valve body; the inner surface of the valve body comprising at least one conical portion comprising a small end and a large end, wherein the small end of the conical portion is pointed from the ball member towards the inlet or the outlet; wherein a resilient seal element is configured to sealingly engage with the conical portion of the valve body; at least one annular valve seat is made of material comprising at least a first component for providing resilience and a second component for providing structural strength; and the at least one annular valve seat is configured to both support the resilient seal element and sealingly engage with the ball member.

In an embodiment the resilient seal element has an annular shape. In an embodiment the resilient seal element is an O-ring. In an embodiment the first component is PTFE. In an embodiment the second component is metal, metal alloy, glass fiber or carbon in any form. In an embodiment the second component is stainless steel. In an embodiment the at least one annular valve seat is configured to position the resilient seal element. In an embodiment the at least one annular valve seat comprises a groove for positioning the resilient seal element.

One aspect discloses a method of manufacturing a ball valve comprising a metal tube, a ball member, a first annular valve seat and a first resilient seal element. The method comprises: expanding a portion of the metal tube to form a first portion of the valve body, an inner surface of the valve body having a first conical portion and the remaining portion of the metal tube to form a first end of the ball valve, positioning the first resilient seal element on the first annular valve seat and the first annular valve seat against the ball member, the first annular valve seat sealingly engaging with the ball member and the first resilient seal element sealingly engaging with the first conical portion of the valve body.

In an embodiment the ball valve comprises a second annular valve seat and a second resilient seal element and the method comprises: positioning the second resilient seal element on the second annular valve seat and the second annular valve seat against the ball member, the second annular valve seat sealingly engaging with the ball member; and contracting a portion of the expanded metal tube to form a second portion of the valve body and a second end of the ball valve, the inner surface of the valve body forming a second conical portion, the second resilient seal element sealingly engaging with the second conical portion of the valve body.

In an embodiment a stem bush is formed after expanding the metal tube. In an embodiment a stem is connected to the ball member by pressing the stem through the stem bush to a receiving portion of the ball member. In an embodiment the stem bush comprises a groove and the stem comprises a retaining ring configured to fasten the stem to the stem bush. In an embodiment the first resilient seal element is an O-ring. In an embodiment the first annular valve seat is made of material comprising at least a first component for providing resilience and a second component for providing structural strength.

Furthermore, if desired, one or more of the above-described functions may be optional or may be combined. It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method of manufacturing a ball valve comprising:
a metal tube,
a ball member (110),
a first annular valve seat (121),
a first resilient seal element (123),
a second annular valve seat (122) and
a second resilient seal element (124);
wherein the method comprises:
expanding a portion of the metal tube to form a first portion of the valve body (100), an inner surface of the valve body (100) having a first conical portion (104) and the remaining portion of the metal tube to form a first end of the ball valve;
positioning the first resilient seal element (123) on the first annular valve seat (121) and the first annular valve seat (121) against the ball member (110), the first annular valve seat (121) sealingly engaging with the ball member (110) and the first resilient seal element (123) sealingly engaging with the first conical portion (104) of the valve body;
wherein the first annular valve seat (121) is made of material comprising at least a first component for providing resilience;
**characterized in that** the material comprises a second component for providing structural strength and the method comprises:
positioning the second resilient seal element (124) on the second annular valve seat (122) and the second annular valve seat (122) against the ball member (110), the second annular valve seat (122) sealingly engaging with the ball member (110); and
contracting a portion of the expanded metal tube to form a second portion of the valve body (100) and a second end of the ball valve, the inner surface of the valve body forming a second conical portion (105), the second resilient seal element (124) sealingly engaging with the second conical portion (105) of the valve body.

2. The method according to claim 1, **characterized by** forming a stem bush (103) after expanding the metal tube.

3. The method according to claim 2, **characterized by** connecting a stem (130) to the ball member (110) by pressing the stem (130) through the stem bush (103) to a receiving portion of the ball member (110).

4. The method according to claim 3, **characterized by** the stem bush (103) comprising a groove and the stem (130) comprising a retaining ring (131) configured to fasten the stem (130) to the stem bush (103).

5. The method according to any of the claims 1-4, **characterized by** the first resilient seal element (123) being an O-ring.

## Patentansprüche

1. Verfahren zur Herstellung eines Kugelventils, umfassend:
ein Metallrohr,
ein Kugelelement (110),
einen ringförmigen Ventilsitz (121),
ein erstes elastisches Dichtungselement (123),
einen zweiten ringförmigen Ventilsitz (122) und ein zweites elastisches Dichtungselement (124);
wobei das Verfahren umfasst:
Expandieren eines Abschnitts des Metallrohrs, um einen ersten Abschnitt des Ventilkörpers (100) zu bilden, wobei eine innere Oberfläche des Ventilkörpers (100) einen ersten konischen Abschnitt (104) und den verbleibenden Abschnitt des Metallrohrs aufweist, um ein erstes Ende des Kugelventils zu bilden;
Positionieren des ersten elastischen Dichtungselements (123) auf dem ersten ringförmigen Ventilsitz (121) und des ersten ringförmigen Ventilsitzes (121) gegen das Kugelelement (110), wobei der erste ringförmige Ventilsitz (121) abdichtend mit dem Kugelelement (110) in Eingriff steht und das erste elastische Dichtungselement (123) abdichtend mit dem ersten konischen Abschnitt (104) des Ventilkörpers in Eingriff steht;
wobei der erste ringförmige Ventilsitz (121) aus Metall gefertigt ist, das zumindest eine erste Komponente zur Bereitstellung von Elastizität umfasst;
**dadurch gekennzeichnet, dass** das Material eine zweite Komponente zur Bereitstellung einer strukturellen Festigkeit umfasst und das Verfahren umfasst:
Positionieren des zweiten elastischen Dichtungselements (124) auf dem zweiten ringförmigen Ventilsitz (122) und des zweiten ringförmigen Ventilsitzes (122) gegen das Kugelelement (110), wobei der zweite ringförmige Ventilsitz (122) abdichtend mit dem Kugelelement (110) in Eingriff steht; und
Zusammenziehen eines Abschnitts des expandierten Metallrohrs, um einen zweiten Abschnitt des Ventilkörpers (100) und ein zweites Ende des Kugelventils zu bilden, wobei die innere Oberfläche des Ventilkörpers einen zweiten konischen Abschnitt (105) bildet, wobei das zweite elastische Dichtungselement (124) abdichtend mit dem zweiten konischen Abschnitt (105) des Ventilkörpers in Eingriff steht.

2. Verfahren nach Anspruch 1, **gekennzeichnet durch** Ausbilden einer Schaftbuchse (103) nach Expandieren des Metallrohrs.

3. Verfahren nach Anspruch 2, **gekennzeichnet durch** Verbinden eines Schafts (130) mit dem Kugelelement (110) durch Drücken des Schafts (130) durch die Schaftbuchse (103) zu einem Aufnahmeabschnitt des Kugelelements (110).

4. Verfahren nach Anspruch 3, **dadurch gekennzeichnet, dass** die Schaftbuchse (103) eine Nut umfasst und der Schaft (130) einen Haltering (131) umfasst, der eingerichtet ist, um den Schaft (130) an der Schaftbuchse (103) zu halten.

5. Verfahren nach einem der Ansprüche 1-4, **dadurch gekennzeichnet, dass** das erste elastische Dichtungselement (123) ein O-Ring ist.

## Revendications

1. Procédé de fabrication d'une soupape à bille comprenant :
un tube métallique,
un organe de bille (110),
un premier siège de soupape annulaire (121),
un premier élément d'étanchéité élastique (123),
un deuxième siège de soupape annulaire (122), et
un deuxième élément d'étanchéité élastique (124) ;
dans lequel le procédé comprend le fait :
de dilater une partie du tube métallique pour former une première partie du corps de soupape (100), une surface intérieure du corps de soupape (100) ayant une première partie conique (104) et la partie restante du tube métallique pour former une première extrémité de la soupape à bille ;
de positionner le premier élément d'étanchéité élastique (123) sur le premier siège de soupape annulaire (121) et le premier siège de soupape annulaire (121) contre l'organe de bille (110), le premier siège de soupape annulaire (121) s'engageant de manière étanche avec l'organe de bille (110) et le premier élément d'étanchéité élastique (123) s'engageant de manière étanche avec la première partie conique (104) du corps de soupape ;
dans lequel le premier siège de soupape annulaire (121) est réalisé en un matériau comprenant au moins un premier composant pour fournir de l'élasticité ;
**caractérisé en ce que** le matériau comprend un deuxième composant pour fournir une résistance structurelle et le procédé comprend le fait :
de positionner le deuxième élément d'étanchéité élastique (124) sur le deuxième siège de soupape annulaire (122) et le deuxième siège de soupape annulaire (122) contre l'organe de bille (110), le deuxième siège de soupape annulaire (122) s'engageant de manière étanche avec l'organe de bille (110) ; et
de contracter une partie du tube métallique dilaté pour former une deuxième partie du corps de soupape (100) et une deuxième extrémité de la soupape à bille, la surface intérieure du corps de soupape formant une deuxième partie conique (105), le deuxième élément d'étanchéité élastique (124) s'engageant de manière étanche avec la deuxième partie conique (105) du corps de soupape.

2. Procédé selon la revendication 1, **caractérisé par** la formation d'une douille de tige (103) après la dilatation du tube métallique.

3. Procédé selon la revendication 2, **caractérisé par** le liaison d'une tige (130) à l'organe de bille (110) en pressant la tige (130) à travers la douille de tige (103) sur une partie de réception de l'organe de bille (110).

4. Procédé selon la revendication 3, **caractérisé en ce que** la douille de tige (103) comprend une rainure et la tige (130) comprend une bague de retenue (131) configurée pour fixer la tige (130) à la douille de tige (103).

5. Procédé selon l'une des revendications 1 à 4, **caractérisé en ce que** le premier élément d'étanchéité élastique (123) est un joint torique.
